# NOUVEAU FASCICULE DE BREVET EUROPEEN

(11) **EP 0 650 934 B2**
(45) Date de publication et mention de la décision concernant l'opposition: **03.09.2003**
(45) Mention de la délivrance du brevet: 23.02.2000
(21) Numéro de dépôt: 94402429.8
(22) Date de dépôt: 27.10.1994
(51) Int. Cl.: C03B 5/235, C03B 5/04

(54) **Dispositif pour la fusion du verre**
Vorrichtung zum Schmelzen von Glas
Apparatus for melting glass

(30) Priorité: 02.11.1993 FR 9313021
(43) Date de publication de la demande: 03.05.1995
(73) Titulaire: SAINT-GOBAIN GLASS FRANCE, 92400 Courbevoie (FR)
(72) Inventeur: Moreau, Raymond, F-78290 Croissy Sur Seine (FR); Gobert, Roger, F-78810 Feucherolles (FR); Jeanvoine, Pierre, F-78300 Poissy (FR)
(74) Mandataire: Renous Chan, Véronique

(56) Documents cités:
- EP-A- 0 426 082
- EP-A- 0 532 825
- EP-A1- 0 230 492
- EP-A2- 0 293 545
- EP-B1- 0 317 551
- DE-A- 3 202 105
- DE-A- 3 836 763
- US-A- 3 532 483
- US-A- 4 001 001
- US-A- 4 029 489
- US-A- 4 432 780
- US-A- 4 986 748
- GLASS INDUSTRIE, vol.74, no.11, 10 Octobre 1993, NEW YORK pages 18 - 22, XP400633 SHAMP,DONALD 'oxy-fuel firing for emissions control on a fiberglass melter'
- Article Graeber/Vossen: "Sauerstoff in der Glas-und Keramikindustrie", SPRECHSAAL, 112 ème anneée, volume 10/79, pages 720 et 721
- Article Brown: "A Second Revolution in Glass Melting Technology", pages 7 et 8, publié dans GLASS INTERNATIONAL, Mars 1993

## Description

L'invention concerne l'application d'un dispositif pour la fusion et l'affinage de verre à partir de matières vitrifiables, dispositif plus communément appelé four de fusion, en vue d'alimenter, en continu, en verre fondu des installations de formage, de verre plat comme des installations de laminage ou float.

L'invention s'intéresse aux fours de fusion pour le verre plat, impliquant des capacités de production en verre fondu importantes, capacité qui peuvent se chiffrer par exemple par des tirées d'au moins 100 tonnes/jour et pouvant aller jusqu'à 1000 tonnes/jour et plus. Cependant, elle s'avère aussi avantageuse pour des fours de moindre taille.

Ce type de four se décompose usuellement, de manière connue, en une succession de compartiments débouchant les uns dans les autres et ayant chacun des fonctions et dimensions spécifiques. Le four doit en effet être apte à fondre les matières vitrifiables et à garantir l'homogénéité chimique et thermique du verre une fois fondu.

II est ainsi connu du brevet EP-B-0 264 327 une structure de four de fusion comprenant un premier compartiment où s'effectuent la fusion et l'affinage de la composition verrière, suivi d'un second compartiment formant goulot d'étranglement désigné sous le terme de corset.

Ce corset débouche dans un compartiment où s'effectue l'homogénéisation, notamment thermique, du verre fondu, compartiment connu sous le terme de braise et qui débouche dans un canal d'écoulement de section beaucoup plus réduite qui déverse le verre fondu vers l'installation de formage adéquate.

On peut, par ailleurs, ranger les fours en deux grandes catégories suivant le moyen de chauffe adopté pour fondre les matières vitrifiables dans le compartiment de fusion :
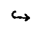 il existe d'une part les fours à fusion électrique, dits « à voûte froide », où la fusion est réalisée par des électrodes qui se trouvent immergées dans la profondeur du verre fondu, ce qui est par exemple connu du brevet EP-B-0 304 371.
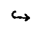 il existe d'autre part les fours à flammes, dits également fours à régénérateurs, notamment connus du brevet US-A-4 599 100. Dans ce cas, la puissance de chauffe est fournie par deux rangées de brûleurs fonctionnant en général avec un mélange fuel/air, et en alternance : les gaz de combustion réchauffent alors alternativement l'un ou l'autre des deux régénérateurs placés en vis-à-vis de part et d'autre du compartiment de fusion et en communication avec celui-ci. Les gaz de combustion s'épuisent thermiquement au travers des empilages de réfractaires qui constituent ces régénérateurs, réfractaires restituant ensuite la chaleur ainsi emmagasinée au compartiment de fusion. Ce mode de chauffe est efficace et largement utilisé, bien qu'il ne soit pas dépourvu de certains inconvénients qui lui sont inhérents. Ainsi le coût énergétique des brûleurs fuel/air est relativement élevé. Par ailleurs, le système de fonctionnement des brûleurs qui sont « activés » en alternance avec des cycles de l'ordre de 20 à 30 minutes, n'est pas des plus simples à contrôler rigoureusement. Leur utilisation conduit en outre à introduire dans le compartiment de fusion une quantité significative d'air, donc d'azote, d'où un risque accru de voir se former une quantité certaine de gaz polluants type NOₓ qu'il faudra ensuite traiter.

Il est connu de la publication « Oxy-Fuel Firing for Emissions Control on a Fiberglass Melter » (Glass Industry, october 1993 - 18-22) un concept de four fonctionnant avec des brûleurs à oxygène.

Il est également connu de la demande de brevet EP-A-426 082, un procédé de fusion du verre utilisant un four équipé de brûleurs à oxygène et muni d'une unité de préchauffage des matières vitrifiables.

Il est connu du brevet US-A-4 001 001 un four à régénérateurs latéraux, où la zone d'enfournement est équipée d'électrodes immergées dans le bain de verre et d'un écran suspendu par la voûte.

En dernier lieu, la quantité importante de réfractaires spéciaux et coûteux nécessaires à la fabrication des régénérateurs renchérit de manière significative le coût de construction du four.

Le but de l'invention est donc de pallier les inconvénients liés à l'utilisation de fours à flammes en proposant un type de chauffe par flammes qui réduit grandement le coût énergétique et le coût en matériaux de construction du four, qui simplifie son mode de fonctionnement, tout en garantissant l'obtention d'un verre fondu d'une qualité au moins aussi élevée.

L'invention a pour objet l'application d'un four pour la fusion de matières vitrifiables, four comportant un compartiment de fusion/affinage du verre muni, en partie « amont », d'au moins une ouverture alimentée en matières vitrifiables à l'aide de dispositifs d'enfournement disposés en regard desdites ouvertures, toutes les matières vitrifiables étant enfournées en partie amont. Au moins une ouverture d'évacuation des gaz de combustion se trouve à proximité de ladite (desdites) ouverture (s). En partie « aval », ledit compartiment de fusion/affinage comporte au moins une ouverture de sortie du verre fondu débouchant dans un ou plusieurs compartiments aval successifs destinés à conduire le verre fondu vers la zone de formage. La fusion des matières vitrifiables est assurée, dans le compartiment de fusion/affinage, pour l'essentiel, par une pluralité de brûleurs à oxygène.

Par ailleurs, la partie « amont » dudit compartiment de fusion/affinage où sont enfournées les matières vitrifiables est, selon l'invention, protégée du rayonnement des flammes des brûleurs par un moyen d'écran thermique du type mur d'ombre ou arc surbaissé, et notamment dépourvue de brûleurs.

En outre, selon l'invention, le four est conçu de manière à ce qu'il n'y ait pas d'arrivée d'air dans le compartiment de fusion et d'affinage, notamment provenant du ou des compartiments aval et/ou provenant, « en amont » du compartiment de fusion, de la zone d'enfournement des matières vitrifiables, par exemple si le compartiment de fusion est « précédé » par un compartiment de préchauffage des matières vitrifiables débouchant dans ce dernier. Pour prévenir toute arrivée d'air, le four peut avantageusement être équipé d'au moins un moyen pour l'étanchéifier vis-à-vis des gaz, notamment entre le compartiment de fusion/affinage et le ou l'un des compartiments « aval ».

Dans le cadre de l'invention, les termes « amont » et « aval » sont en référence à la direction globale d'écoulement du verre fondu au travers du four.

Choisir, conformément à l'invention, un mode de chauffe par des brûleurs fonctionnant à l'oxygène présente en effet toute une série d'avantages par rapport à des brûleurs plus conventionnels, fonctionnant notamment avec un comburant du type air.

Ce mode de chauffe autorise tout d'abord l'abandon du fonctionnement en "inversion" traditionnel des fours à flammes: les brûleurs à oxygène peuvent garder un régime de fonctionnement constant dans le temps, ce qui rend l'utilisation du four plus simple, ce fonctionnement en continu est plus régulier et autorise des réglages beaucoup plus fins qu'avec un fonctionnement en inversion. Surtout on peut supprimer complètement la présence des régénérateurs faits d'empilages de réfractaires coûteux et susceptibles d'usure. Les brûleurs à oxygène sont ainsi aptes à chauffer la voûte du compartiment de fusion/affinage et le volume dit "de laboratoire" entre ladite voûte et le niveau du verre fondu, en continu et sans avoir recours à des régénérateurs.

L'atmosphère qui règne au-dessus du niveau de verre dans le compartiment de fusion/affinage est beaucoup plus stable et contrôlée, ce qui peut s'avérer important pour la production de verres dits spéciaux.

Par ailleurs, le rendement thermique de ce type de brûleurs est notablement plus élevé que celui des brûleurs conventionnels fonctionnant avec un comburant du type air, du fait de l'absence d'azote qui diminue considérablement le volume de fumées générées. On obtient ainsi globalement des réductions de coût énergétique considérables, et ce type de brûleurs permet d'envisager également des augmentations sensibles de la tirée spécifique du four.

Le fait que les brûleurs choisis selon l'invention introduisent une quantité très faible, voire nulle, d'air dans le compartiment de fusion/affinage réduit très fortement les possibilités de formation de gaz polluants type NOₓ, rendant à tout le moins beaucoup moins coûteux le traitement des gaz de combustion évacués hors du compartiment.

En outre, toujours par rapport à des brûleurs conventionnels, les brûleurs à oxygène permettent d'introduire dans le compartiment de fusion/affinage un volume de gaz beaucoup moins important, et, de même, le volume de gaz résultant de la combustion est également fortement diminué comme déjà évoqué. Cela signifie que l'on peut envisager de diminuer le volume dit "de laboratoire" précédemment mentionné, notamment par exemple en abaissant un peu la voûte du compartiment de fusion/affinage, ce qui, là encore, tend à réduire à la fois le coût énergétique et le coût de construction du four lui-même.

Tout, donc, dans l'utilisation de brûleurs à oxygène fonctionnant sans inversion, concourt à l'obtention d'un four plus fiable, moins coûteux dans sa conception et qui permet des économies d'énergie pouvant aller jusqu'à largement au-dessus de 15 % par rapport à un four à flammes conventionnel de dimensions similaires.

Cependant, ce bilan très favorable serait compromis si, contrairement à l'invention, on n'évitait pas l'entrée d'air dans le compartiment de fusion/affinage provenant des compartiments avals. Dans le cas contraire, en effet, on s'expose au risque de recréer une certaine quantité de gaz polluants du type NOₓ dans le compartiment de fusion/affinage et on diminue sensiblement l'économie réalisée sur le plan énergétique au niveau de ce compartiment. On peut prévenir cette arrivée d'air à l'aide de moyens d'étanchéification vis-à-vis des gaz du compartiment de fusion/affinage par rapport au reste du four. Ce ou ces moyens d'étanchéification "isolent" ainsi l'atmosphère régnant au-dessus du verre fondu dans le compartiment de fusion/affinage de l'atmosphère du ou des compartiments "aval" successifs qui lui sont adjacents. Ces compartiments "aval" sont destinés à conditionner le verre, c'est-à-dire essentiellement destinés à le refroidir progressivement afin qu'il atteigne sa température de formage, à parfaire son homogénéité chimique et thermique et à en éliminer les corps étrangers du type infondus
ou particules de matériau réfractaire. Or ce conditionnement thermique peut s'effectuer dans l'un ou l'autre de ces compartiments dits "aval" par, de manière connue, l'utilisation alternative ou combinée de moyens de réchauffage, par exemple des brûleurs conventionnels fuel-air, et de moyens de refroidissement introduisant de l'air en grande quantité à température ambiante dans ces compartiments. Il est donc nécessaire d'empêcher ces types de gaz de "remonter" vers le compartiment de fusion/affinage afin qu'ils n'en perturbent pas son atmosphère très contrôlée.

Il va de soi que si le ou les compartiments aval sont conçus de manière, par exemple, à utiliser des moyens de refroidissement sans introduction d'air, et à présenter une atmosphère non composée d'air, ces moyens pour étanchéifier ne s'avèrent plus indispensable.

Dans le compartiment de fusion/affinage, les brûleurs "à oxygène" selon l'invention (cette expression signifiant que le comburant utilisé est l'oxygène) sont disposés en hauteur, et éventuellement à une hauteur suffisante 9, par rapport au niveau de verre pour que les flammes émises par les brûleurs n'entrent pas en contact direct avec la surface du verre.

Ces brûleurs sont de préférence répartis en rangées sensiblement parallèles à l'axe longitudinal du compartiment de fusion/affinage. La répartition la plus simple consiste à prévoir deux rangées de brûleurs débouchant dans le compartiment de fusion/affinage au travers de ses parois latérales. Pour ce faire, les ouvertures à pratiquer dans les parois sont de section très réduite et ne perturbent donc pas l'isolation thermique globale du compartiment. Le mieux est d'associer les brûleurs en une pluralité de groupes de brûleurs dont la puissance de chauffe est régulée de manière autonome d'un groupe à l'autre. Ces groupes sont notamment disposés successivement transversalement par rapport à l'axe longitudinal du compartiment. La chauffe est ainsi modulée et régulée de manière optimale tout au long du compartiment et on peut y créer tous les profils de température souhaités, notamment suivant le type de verre fondu à fabriquer.

On peut toutefois prévoir, dans le compartiment de fusion/affinage, des moyens de chauffe auxiliaires qui prennent, par exemple, la forme d'électrodes immergées dans la profondeur du verre, afin d'ajuster ou corriger ce profil de température dans le compartiment.

Le fait que le compartiment de fusion/affinage se trouve dépourvu de régénérateurs rend son isolation thermique vis-à-vis de l'extérieur à la fois bien meilleure et beaucoup plus aisée à réaliser. Les parois, notamment les parois latérales et la voûte, peuvent ainsi être isolées de manière renforcée à l'aide de panneaux de forme géométrique simple, plans, constitués de matériau isolant fibreux et/ou de béton isolant projeté, panneaux dont l'épaisseur est cependant suffisamment réduite pour laisser une bonne accessibilité aux parois latérales. Cette facilité d'accès facilite l'entretien du four entre deux campagnes de production de verre.

Pour épuiser thermiquement de manière optimale les fumées issues de la combustion des brûleurs, dans le compartiment de fusion/affinage, on prévoit avantageusement dans les parois dudit compartiment des ouvertures d'évacuation à proximité des ouvertures d'alimentation en matières vitrifiables dans la zone la plus "amont" du compartiment de fusion/affinage. Ces ouvertures d'évacuation sont plus particulièrement placées à proximité de ces ouvertures d'alimentation. Les fumées peuvent ainsi suivre un trajet de la partie "aval" vers la partie "amont" du compartiment, trajet qui les fait cheminer au-dessus de la zone où surnagent les matières vitrifiables, aidant de ce fait à leur fusion. Pour optimiser cet épuisement thermique des fumées de combustion, il est préférable de protéger la partie "la plus amont" du compartiment de fusion/affinage, où sont enfournées les matières vitrifiables, des rayonnements des flammes des brûleurs, par exemple à l'aide d'un écran thermique du type mur d'ombre ou arc sur-baissé et de priver cette zone de tout brûleur. On aurait, sinon tendance à réchauffer dans cette zone les fumées dont on cherche au contraire à abaisser au maximum la température avant évacuation pour tranférer au mieux leur chaleur aux matières vitrifiables surnageantes. L'écran thermique facilite en outre la convergence des fumées vers ces matières vitrifiables.

L'invention met en oeuvre un procédé pour préchauffer une composition de matières vitrifiables dans un four précédemment décrit prévu pour la fusion de ladite composition, procédé consistant à faire passer les fumées de combustion émises dans le compartiment de fusion dudit four au-dessus de la composition de matières vitrifiables qui surnage sur la phase déjà en fusion.

Deux positionnements différents peuvent être adoptés pour la ou les ouvertures d'alimentation en matières vitrifiables qui se trouve(nt) en partie "amont" du compartiment de fusion/affinage. Celles-ci peuvent être pratiquées d'une part dans la paroi frontale du compartiment, d'autre part dans au moins l'une de ses deux parois latérales.

Dans ce dernier cas, le mode de réalisation le plus avantageux consiste à prévoir deux ouvertures symétriques, en regard l'une par rapport à l'autre dans les parois latérales et deux types d'ouvertures, frontale ou latérale, permettent un enfournement de matières vitrifiables efficace. Il apparait cependant que le fait d'enfourner les matières vitrifiables par les ouvertures latérales rend l'opération d'enfournement plus simple et plus souple et surtout permet d'augmenter les surfaces d'échanges thermiques entre matières vitrifiables surnageantes et fumées de combustion. Des dispositifs d'enfournement variés, connus de l'homme de l'art, sont utilisables indifféremment, comme des dispositifs dits "à poussoir", "à tiroir" ou "à pelle", pouvant être oscillants ou non.

Il est en outre possible de ménager des ouvertures d'évacuation de fumées auxiliaires dans les parois latérales au compartiment de fusion/affinage.

Ces fumées, une fois sorties du compartiment, peuvent être encore relativement chaudes. C'est la raison pour laquelle on peut envisager de les transférer dans des dispositifs de récupération de chaleur du type chaudières ou des dispositifs de pré-chauffage des matières vitrifiables avant leur enfournement, ou tout autre dispositif susceptible de récupérer leur chaleur.

Différents moyens pour étanchéifier vis-à-vis des gaz le compartiment de fusion/affinage peuvent être prévus, seuls ou disposés à la suite les uns des autres, ceci afin de protéger l'atmosphère du compartiment de fusion/affinage. Il est clair que plus ces moyens sont nombreux et/ou plus leur efficacité est grande et plus on garantit l'isolation complète du compartiment. Ces moyens prennent la forme, par exemple, d'un écran suspendu et/ou d'un barrage partiellement immergé dans la profondeur du verre fondu. Chacun de ces moyens présente sa propre particularité structurelle, bien qu'ils soient tous en général disposés selon un plan substantiellement vertical. Ainsi, un écran suspendu est généralement conçu de manière à affleurer la surface du verre. Quant au barrage immergé, s'il part de la voûte et pénètre sur une profondeur significative dans l'épaisseur du verre, il offre un barrage total vis-à-vis des gaz. Il présente cependant des contraintes de fabrication qui peuvent tendre à cantonner son utilisation dans des zones de section relativement réduite.

Concernant la localisation du ou de ces moyens d'étanchéification, on prévoit avantageusement d'en disposer un à la jonction entre le compartiment de fusion/affinage et le compartiment "aval" qui lui est adjacent et/ou à la jonction entre deux compartiments "aval" adjacents et/ou dans un des compartiments "aval" à proximité de l'une ou l'autre de ces jonctions.

On prévoit avantageusement les dimensions du compartiment de fusion/affinage, et notamment sa longueur, de manière à maintenir au sein de la masse fondue dans ce compartiment la présence de deux boucles de circulation convectives.

De préférence, la structure globale du four se décompose en un compartiment de fusion/affinage précédemment décrit qui débouche dans un premier compartiment "aval" de section plus réduite dit "avant-canal", débouchant lui-même dans un second compartiment "aval" dit "canal" de section encore plus réduite mais beaucoup plus long. L'avant-canal sert ainsi de zone "tampon" de transition régulant la vitesse du verre qui s'évacue du compartiment de fusion tandis que le canal est équipé de moyens propres à conditionner, refroidir et homogénéiser chimiquement et thermiquement le verre ainsi évacué.

De préférence, les dimensions de ces compartiments "aval" sont choisies par rapport à celles du compartiment de fusion/affinage de façon à ce qu'elles déterminent une profondeur de verre suffisamment réduite pour empêcher la création d'une courroie de recirculation convective du verre fondu vers le compartiment de fusion/affinage. Les économies énergétiques s'en trouvent augmentées puisque le verre une fois évacué du compartiment de fusion/affinage n'y retourne plus pour être à nouveau chauffé. Une telle conception est notamment décrite dans la demande de brevet FR-93/13022 du 2 novembre 1993, dont l'enseignement est incorporé dans la présente demande.

Bien sûr, le compartiment de fusion/affinage selon l'invention peut également être avantageusement suivi de compartiments "aval" de conception tout à fait différente, comme par exemple ceux décrits dans le brevet pré-mentionné EP-B-0 264 327.

L'écran thermique précédemment évoqué peut notamment prendre la forme d'un arc sur-baissé qui délimite un changement dans la hauteur du volume "de laboratoire". En d'autres termes, on peut prévoir que le rapport entre hauteur totale et profondeur de verre soit "en amont" de cet écran inférieur à celui "en aval" dudit écran, toujours dans le compartiment de fusion/affinage. On accélère ainsi la vitesse des fumées de combustion convergeant vers les matières vitrifiables surnageantes.

L'application du four selon l'Invention est l'alimentation en verre fondu d'installations de formage de verre plat, les installations de verre float étant particulièrement visées.

D'autres caractéristiques et avantages de l'invention apparaissent dans la description complémentaire détaillée d'un mode de réalisation non limitatif, à l'aide des figures suivantes qui représentent :
- **figure 1 :** une vue en coupe longitudinale du compartiment de fusion/affinage,
- **figure 2 :** une vue en plan du compartiment de fusion/affinage,
- **figure 3 :** une vue en couple longitudinale de l'ensemble du four,
- **figure 4 :** une vue en plan de l'ensemble du four.

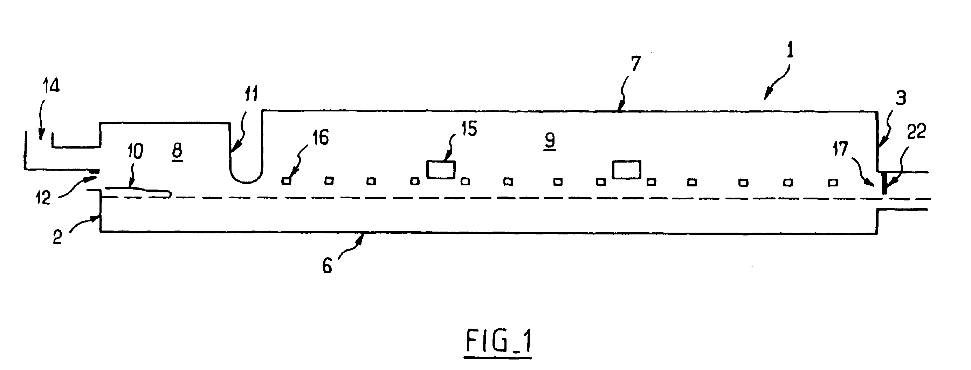

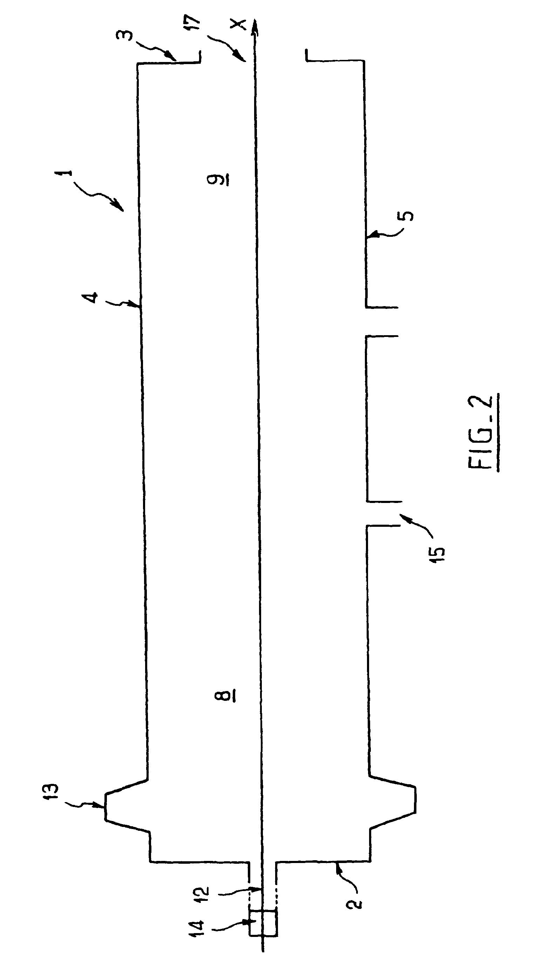

Les figures 1 et 2 représentent de manière schématique le compartiment 1 de fusion/affinage du verre auquel l'invention s'intéresse tout particulièrement. Ce compartiment est délimité par des parois frontales "amont" 2 et "aval" 3, par des parois latérales 4, 5, une sole 6 et une voute 7, toutes fabriquées à partir de matériaux réfractaires appropriés. La sole 6 est plane selon un plan sensiblement horizontal, les parois 2, 3, 4 et 5 sont également planes mais selon un plan sensiblement vertical. La voûte 7 présente une courbure transversale à l'axe longitudinal X du compartiment 1 indiqué en figure 2.

Le niveau de verre fondu est indiqué à la figure 1 par la ligne horizontale Y en traits discontinus.

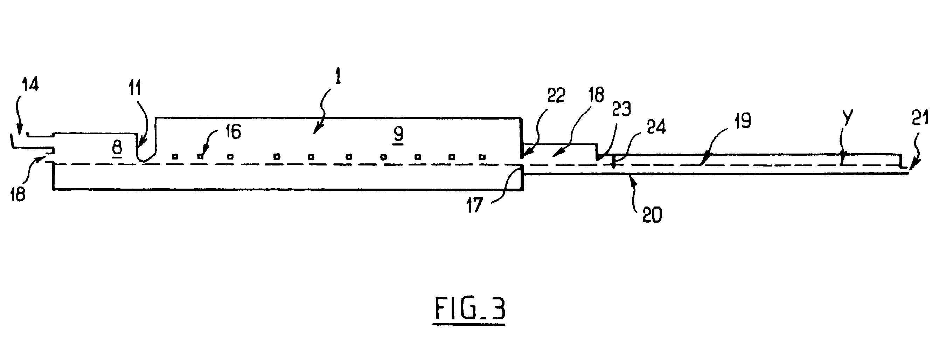

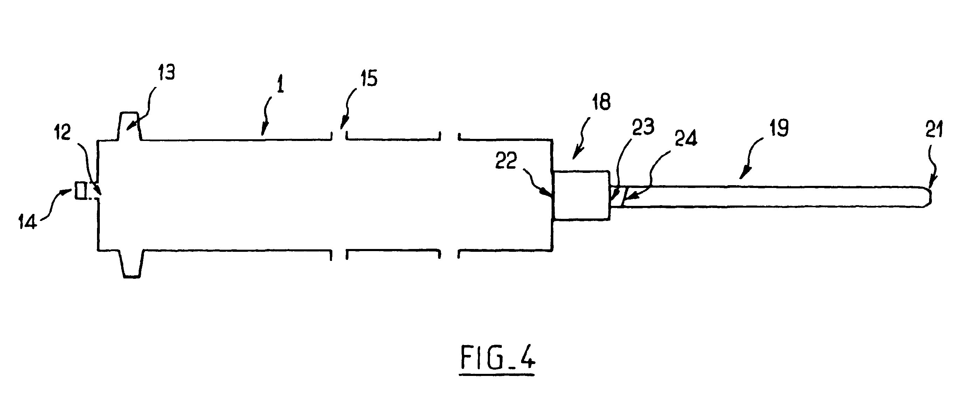

Ce compartiment 1 comporte deux zones principales 8 et 9, successives par rapport à l'axe longitudinal : la première zone 8 est la zone "amont" où sont enfournées les matières vitrifiables 10 surnageant sur le bain de verre fondu, la seconde zone 9 est la zone "aval" où le bain de verre est plus particulièrement chauffé, puis évacué vers les compartiments "aval" adjacents qui seront décrits ultérieurement à l'aide des figures 3 et 4.

La délimitation entre les zones 8 et 9 est marquée par la présence d'un arc sur-baissé 11 et une diminution, en amont de cet arc, de la hauteur de voûte 7 par rapport au niveau de verre Y.

Dans la zone 8, est prévu un mode d'enfournement soit frontal, soit latéral, de la masse des matières vitrifiables appelée aussi composition verrière.

Dans le premier cas, l'ouverture d'alimentation en matières vitrifiables 12 est ménagée dans la paroi frontale amont 2 en regard d'un dispositif d'enfournement usuel non représenté.

Dans le second cas, qui est celui représenté en figure 2, deux ouvertures 12, 13 symétriques sont prévues dans des décrochements dans les parois latérales 4, 5, permettant une double alimentation en composition.

Quel que soit le type d'enfournement, latéral ou frontal, adopté, des ouvertures 14 d'évacuation des fumées de combustion sont prévues juste à proximité des ouvertures d'alimentation 12. Pour des raisons d'encombrement, il est préférable qu'à des ouvertures d'alimentation 12, 13 latérales soient associées des ouvertures d'évacuation des fumées frontales et réciproquement. Dans le cas représenté à la figure 2, la ou les ouvertures d'évacuation des fumées sont donc pratiquées dans la paroi frontale amont 2.

Grâce à la disposition relative des ouvertures d'alimentation et des ouvertures d'évacuation des fumées et grâce également à la présence de l'arc-surbaissé ; on impose auxdites fumées provenant de la zone 9 essentiellement un trajet d'évacuation les faisant longer la masse de matières vitrifiables 10 non encore fondue, ce qui améliore le rendement énergétique du four.

Les fumées une fois extraites alimentent tout type de dispositif de récupération de chaleur ou dispositif de préchauffage des matières vitrifiables avant leur enfournement.

La zone 9 est beaucoup plus longue que la zone 8. Elle est munie de conduits d'évacuation de fumées 15 auxiliaires dans les parois latérales 4, 5. Dans ces mêmes parois sont percées des petites ouvertures permettant de faire déboucher dans le compartiment 1 deux rangées de brûleurs à oxygène 16 au-dessus du niveau de verre Y. L'accessibilité des parois et l'ajustement du positionnement des brûleurs dans le compartiment sont rendues possibles par le fait qu'une isolation thermique renforcée des parois latérales est prévue, ce qui permet d'en diminuer l'épaisseur globale. Cette isolation est conçue à l'aide de panneaux plans en matériau fibreux et/ou en béton isolant projeté.

Les brûleurs 16 sont disposés de préférence à égale distance les uns des autres, dans chacune des deux rangées. Ils sont répartis en sous-groupes d'une ou de plusieurs "paires" de brûleurs.

Ces paires étant constituées de deux brûleurs, chacun appartenant à une rangée, et qui sont en vis-à-vis ou sont plus ou moins décalés l'un par rapport à l'autre. Chaque sous-groupe est régulé en puissance de chauffe de manière indépendante des autres. On peut ainsi obtenir différents profils de température selon l'axe longitudinal du four notamment, en tout point et à tout moment, et ceci de manière fiable. Il est à noter que la zone amont 8 est privée de brûleurs, de manière à ce que les fumées qui y pénètrent pour réchauffer les matières vitrifiables s'épuisent thermiquement de manière optimale sans être elles-mêmes soumises à un réchauffage dans cette zone.

L'arc sur-baissé 11 qui sert de frontière entre les deux zones 8 et 9 sert d'écran thermique afin d'éviter un rayonnement des flammes des brûleurs 16 de la zone 9 vers la zone 8. La raison en est, comme précédemment, qu'il est peu avantageux de réchauffer des fumées une fois qu'elles ont pénétré dans la zone amont 8. La partie inférieure de l'arc est cependant suffisamment distante du niveau de verre fondu Y pour ne pas constituer un obstacle à la circulation des fumées de combustion de la zone 9 à la zone 8, mais plutôt pour faciliter leur convergence vers les matières vitrifiables surnageantes 10.

Toujours dans la zone 9 du compartiment 1, est aménagée une ouverture 17 d'évacuation du verre fondu dans la paroi frontale aval 3. Cette ouverture fait un seuil sur-élevé par rapport au niveau du plan de la sole 6, seuil qui se prolonge et débouche dans le compartiment aval adjacent. Le choix de la hauteur de ce seuil gouverne l'épaisseur du verre fondu qui va passer dans ce compartiment aval.

L'intérêt de l'utilisation de brûleurs à oxygène fonctionnant en continu est que leur rendement thermique est nettement plus élevé que celle de brûleurs conventionnels, en utilisant un volume de gaz réduit et en engendrant un volume de fumées de combustion également réduit. La conception du compartiment peut en conséquence être modifiée, notamment en diminuant un peu le volume de laboratoire, sans préjudice a priori pour le fonctionnement du four, d'où une économie en matériaux de construction de four. Par ailleurs, les brûleurs à oxygène n'introduisent pas d'air, notamment d'azote, dans le compartiment, ce qui évite la formation de gaz type NOₓ.

Les avantages sont garantis à condition de préserver cette atmosphère particulière au-dessus du verre fondu dans le compartiment 1 de fusion/affinage, d'où les moyens en vue de l'étanchéifier vis-à-vis des gaz qui vont être décrits à l'aide des figures 3 et 4 qui représentent le four dans son ensemble : on y voit le compartiment 1 de fusion/affinage précédemment décrit suivi d'un avant-canal 18 lui-même suivi d'un canal 19. La section de l'avant-canal 18 est intermédiaire entre celle du compartiment 1 de fusion/affinage et celle du canal 19. La paroi 20 de ces compartiments se trouve sur-élevée par rapport à la sole 6 du compartiment 1 de fusion/affinage. Le canal 19 s'achève en une lèvre d'écoulement 21 qui distribue le verre fondu vers une zone de formage non représentée.

Les dimensions de ces deux compartiments 18, 19 aval sont choisies afin qu'il n'y ait pas de courroie convective de recirculation du verre fondu de ces derniers vers le compartiment 1, ce qui diminue considérablement l'effort de chauffe nécessaire dans le compartiment 1.

Les moyens pour étanchéifier précédemment évoqués sont ici au nombre de trois. Le premier est situé à la jonction entre le compartiment de fusion/affinage 1 et l'avant-canal 18.

Il s'agit d'un écran suspendu 22 fixé en partie supérieure de l'ouverture 17 de sortie de verre fondu, écran qui affleure le niveau de verre Y. Le second moyen 23 est prévu à la jonction entre l'avant-canal 18 et le canal 19, et prend la même forme que le premier.

Le dernier est prévu à proximité de la jonction avant-canal-18/canal 19, dans le canal 19 lui-même.

Il s'agit d'un barrage immergé 24 qui est suspendu à la voûte du compartiment et plonge partiellement dans le verre. Il peut en outre répondre à un objectif de drainage.

La combinaison de ces trois moyens est optimale pour étanchéifier totalement le compartiment 1 par rapport à chacun des compartiments 18, 19 qui lui succèdent. Il reste qu'il est dans le cadre de l'invention de les combiner différemment ou dans un ordre différent, de n'en utiliser qu'un ou deux ou au contraire davantage...

En conclusion, l'application selon l'invention améliore le système de chauffe dans le compartiment de fusion et rend le coût de fonctionnement et de fabrication moins onéreux. Un dernier avantage est un contrôle accru de l'atmosphère du compartiment de fusion, ainsi qu'un risque de pollution plus faible.

Par ailleurs, il va de soi, comme déjà précisé, que le système de chauffe selon l'invention peut être utilisé pour un four qui serait muni de compartiments "aval" dans le sens de l'invention qui diffèreraient de ceux représentés aux figures 3 et 4, et notamment muni d'un corset suivi d'une braise.

Il est aussi clair que le compartiment de fusion/affinage peut être équipé de tous moyens connus pour affiner et homogénéiser le verre ou en contrôler les mouvements de convection, par exemple tous types d'agitateurs, bouillonneurs. Les compartiments dits "aval" peuvent de manière connue, être également pourvus de tous moyens aptes à conditionner le verre, tous moyens de drainage, de refroidissement et d'homogénéisation thermique ou chimique du verre fondu.

## Revendications

1. Application d'un four à l'alimentation en verre fondu d'installations de formage de verre plat du type installation de verre float, ledit four comportant un compartiment (1) de fusion/affinage du verre, ledit compartiment étant muni, en partie amont d'au moins une ouverture (12) étant alimentée en matières vitrifiables (10) à l'aide d'un dispositif d'enfournement placé en regard, et à proximité de laquelle se trouve au moins une ouverture (14) d'évacuation des gaz de combustion, et en partie aval, d'une ouverture (17) de sortie du verre fondu débouchant dans un ou plusieurs compartiments (18, 19) successifs aval destiné(s) à conduire le verre fondu vers la zone de formage, la fusion des matières vitrifiables étant assurée dans le compartiment (1) de fusion/affinage, pour l'essentiel, par une pluralité de brûleurs (16) à oxygène, **caractérisé en ce que** ledit compartiment (1) de fusion/affinage est conçu sans arrivée d'air, notamment provenant du ou des compartiments aval, et **en ce que** la partie amont (8) dudit compartiment de fusion/affinage (1) où sont enfournées les matières vitrifiables (10) est protégée du rayonnement des flammes des brûleurs (16) par un moyen (11) d'écran thermique du type mur d'ombre
ou arc surbaissé, et notamment dépourvue de brûleurs, toute les matières vitrifiables étant enfournées en partie amont.

2. Application selon la revendication 1, **caractérisé en ce** le four est équipé d'au moins un moyen pour étanchéifier vis-à-vis des gaz le compartiment (1) de fusion et d'affinage, notamment entre celui-ci et le ou (l'un des) compartiment(s) aval (18, 19).

3. Application selon la revendication 1 ou 2, **caractérisé en ce que** les brûleurs (16) sont répartis en vis-à-vis en deux rangées, les brûleurs débouchant dans le compartiment (1) de fusion/affinage au travers des parois latérales (4, 5) de celui-ci.

4. Application selon l'une des revendications précédentes, **caractérisé en ce que les** brûleurs (16) sont répartis en une pluralité de groupes dont la puissance de chauffe est régulée de manière autonome d'un groupe à l'autre.

5. Application selon l'une des revendications précédentes, **caractérisé en ce que** des moyens auxiliaires de chauffe sont prévus dans le compartiment fusion/affinage (1), notamment sous forme d'électrodes immergées dans la profondeur de verre fondu.

6. Application selon l'une des revendications précédentes, **caractérisé en ce que** les parois du compartiment de fusion :affinage (1), notamment les parois latérales (4, 5) et la voûte (7), sont équipées de moyens d'isolation renforcée sous forme de panneaux en matériau isolant fibreux et/ou de béton isolant projeté.

7. Application selon l'une des revendications précédentes, **caractérisé en ce que** le rapport entre la profondeur de verre fondu et la hauteur totale du compartiment (1) de fusion et d'élaboration mesurée entre sole (6) et clef de voûte (7) est, en amont du moyen d'écran thermique (11), inférieur à celui mesuré en aval dudit écran.

8. Application selon l'une des revendications précédentes, **caractérisé en ce que** la ou les ouvertures (12) d'alimentation en matières vitrifiables (10) sont pratiquées en partie amont (8) du compartiment de fusion: affinage (1), dans sa paroi frontale (2) ou dans au moins une de ses deux parois latérales (4, 5).

9. Application selon la revendication 8, **caractérisé en ce qu'**il présente deux ouvertures d'alimentation (12, 13) en matières vitrifiables (10) en partie amont (8) du compartiment (1) de fusion et d'élaboration, ouvertures pratiquées symétriquement l'une par rapport à l'autre dans les deux parois latérales (4, 5) dudit compartiment (1).

10. Application selon l'une des revendications précédentes, **caractérisé en ce que** le compartiment (1) de fusion/affinage est muni d'ouvertures (14) d'évacuation des fumées de combustion situées dans sa partie amont (8) où sont enfournées les matières vitrifiables, ouvertures pratiquées dans sa paroi frontale (2) ou dans au moins une de ses deux parois latérales (4 5).

11. Application selon la revendication 10, **caractérisé en ce que** des ouvertures auxiliaires (15) d'évacuation des fumées de combustion sont prévues dans le compartiment (1) de fusion et d'élaboration dans ses parois latérales (4, 5).

12. Application selon l'une des revendications 10 ou 11, **caractérisé en ce que** les fumées de combustion évacuées du compartiment (1) de fusion et d'élaboration sont transférées dans des dispositifs de récupération de chaleur du type chaudières ou des dispositifs de réchauffage des matières vitrifiables avant enfournement.

13. Application selon l'une des revendications précédentes, **caractérisé en ce que** le(s) moyen(s) pour étanchéifier (22, 23, 24) vis-à-vis des gaz entre le compartiment (1) de fusion et d'élaboration et le(s) compartiment(s) aval (18, 19) comporte(nt) au moins un écran suspendu et/ou un barrage immergé partiellement dans le verre fondu.

14. Application selon l'une des revendications précédentes, **caractérisé en ce que** le(s) moyen(s) pour étanchéifier (22, 23, 24) vis-à-vis des gaz entre le compartiment (1) de fusion et d'élaboration sont prévus à la jonction entre le compartiment (1) de fusion et d'élaboration et le compartiment (19) aval adjacent et/ou à la jonction entre deux compartiments aval successifs (18, 19) et/ou dans un des compartiments aval à proximité d'une de ces jonctions.

15. Application selon l'une des revendications précédentes, **caractérisé en ce que** le compartiment (1) de fusion et d'élaboration débouche dans un premier compartiment aval (18) de section plus réduite, dit avant-canal, débouchant lui-même dans un second compartiment aval (19) de section encore plus réduite, dit canal.

16. Application selon l'une des revendications précédentes, **caractérisé en ce que** les dimensions du ou des compartiments aval (18, 19) par rapport au compartiment (1) de fusion et d'élaboration sont choisies telles qu'elles déterminent une profondeur de verre fondu circulant dans le(s) dit(s) compartiment(s) aval sans courroie de recirculation du verre fondu vers le compartiment (1) de fusion et d'élaboration.

## Patentansprüche

1. Verwendung eines Ofens, um eine Formgebungsanlage für Flachglas vom Typ Floatglasanlage mit Glasschmelze zu versorgen, wobei der Ofen ein Abteil (1) für das Erschmelzen/Läutern von Glas umfaßt, das im stromaufwärtigen Teil mit mindestens einer Öffnung (12), die mittels einer gegenüber angeordneten Beschickungseinrichtung mit Glasrohstoffen (10) versorgt wird und in deren Nähe sich mindestens eine Öffnung (14) für den Abzug der Verbrennungsgase befindet, und im stromabwärtigen Teil mit einer Ausgangsöffnung (17) für die Glasschmelze versehen ist, die in ein oder mehrere aufeinander folgende stromabwärtige Abteile (18, 19) mündet, das (die) vorgesehen ist (sind), die Glasschmelze in die Formgebungszone zu bringen, wobei das Schmelzen der Glasrohstoffe im Schmelz/Läuterungs-Abteil (1) im wesentlichen von einer Vielzahl von Sauerstoffbrennern (16) sichergestellt wird, **dadurch gekennzeichnet, daß** das Schmelz/Läuterungs-Abteil (1) ohne den Zutritt von Luft, die speziell aus dem (den) stromabwärtigen Abteil(en) stammt, konstruiert ist, **und daß** der stromaufwärtige Teil (8) des Schmelz/Läuterungs-Abteils (1), wo die Glasrohstoffe (10) beschickt werden, durch ein Wärmeschutzmittel (11) wie eine Schattenwand oder ein Flachbogen vor Strahlung aus den Flammen der Brenner (16) geschützt und insbesondere frei von Brennern ist und sämtliche Glasrohstoffe im stromaufwärtigen Teil beschickt werden.

2. Verwendung nach Anspruch 1, **dadurch gekennzeichnet, daß** der Ofen mit mindestens einem Mittel ausgestattet ist, um das Schmelz/Läuterungs-Abteil (1), insbesondere zwischen diesem und dem (oder einem der) stromabwärtigen Abteil(e) (18, 19) gegen Gas abzudichten.

3. Verwendung nach Anspruch 1 oder 2, **dadurch gekennzeichnet, daß** die Brenner (16) einander gegenüber in zwei Reihen verteilt sind, wobei die Brenner in das Schmelz/Läuterungs-Abteil (1) durch dessen Seitenwände (4, 5) führen.

4. Verwendung nach einem der vorhergehenden Ansprüche, **dadurch gekennzeichnet, daß** die Brenner (16) auf mehrere Gruppen verteilt sind, deren Heizkraft von einer Gruppe zur nächsten autonom geregelt wird.

5. Verwendung nach einem der vorhergehenden Ansprüche, **dadurch gekennzeichnet, daß** im Schmelz/Läuterungs-Abteil (1) zusätzliche Beheizungsmittel, insbesondere in Form von Elektroden, welche in die Tiefe der Glasschmelze eintauchen, vorgesehen sind.

6. Verwendung nach einem der vorhergehenden Ansprüche, **dadurch gekennzeichnet, daß** die Wände des Schmelz/Läuterungs-Abteils (1), insbesondere die Seitenwände (4, 5) und die Decke (7), mit verstärkten Isoliermitteln in Form von Platten aus Isolierfasermaterial und/oder Isolierspritzbeton, versehen sind.

7. Verwendung nach einem der vorhergehenden Ansprüche, **dadurch gekennzeichnet, daß** das Verhältnis von Tiefe der Glasschmelze zu Gesamthöhe des Schmelz/Läuterungs-Abteils (1), gemessen zwischen Sohle (6) und Schlußstein der Decke (7), vor dem Wärmeschutzmittel (11) kleiner als das hinter diesem Mittel gemessene ist.

8. Verwendung nach einem der vorhergehenden Ansprüche, **dadurch gekennzeichnet, daß** die Öffnung(en) (12) für die Versorgung mit Glasrohstoffen (10) im stromaufwärtigen Teil (8) des Schmelz/Läuterungs-Abteils (1) in dessen Vorderwand (2) oder in wenigstens einer von dessen zwei Seitenwänden (4, 5) angebracht ist (sind).

9. Verwendung nach Anspruch 8, **dadurch gekennzeichnet, daß** er zwei Öffnungen (12, 13) für die Versorgung mit Glasrohstoffen (10) im stromaufwärtigen Teil (8) des Schmelz/Läuterungs-Abteils (1) aufweist, die in den beiden Seitenwänden (4, 5) dieses Abteils (1) symmetrisch zueinander angebracht sind.

10. Verwendung nach einem der vorhergehenden Ansprüche, **dadurch gekennzeichnet, daß** das Schmelz/Läuterungs-Abteil (1) in seinem stromaufwärtigen Teil (8), wo die Glasrohstoffe beschickt werden, für den Abzug der Verbrennungsgase mit Öffnungen (14) versehen ist, die in seiner Vorderwand (2) oder in mindestens einer seiner beiden Seitenwände (4, 5) angebracht sind.

11. Verwendung nach Anspruch 10, **dadurch gekennzeichnet, daß** zusätzliche Öffnungen (15) für den Abzug der Verbrennungsgase in den Seitenwänden (4, 5) des Schmelz/Läuterungs-Abteils (1) vorgesehen sind.

12. Verwendung nach Anspruch 10 oder 11, **dadurch gekennzeichnet, daß** die aus dem Schmelz/Läuterungsabteil (1) abgesaugten Verbrennungsgase in Wärmerückgewinnungseinrichtungen wie Heizkessel oder Einrichtungen zum Erhitzen von Glasrohstoffen vor dem Beschicken geleitet werden.

13. Verwendung nach einem der vorhergehenden Ansprüche, **dadurch gekennzeichnet, daß** das (die) Mittel (22, 23, 24) zwischen dem Schmelz/Läuterungs-Abteil (1) und dem (den) stromabwärtigen Abteil(en) (18, 19) zum Abdichten gegen Gase mindestens eine Hängewand und/oder ein Wehr, das teilweise in die Glasschmelze eintaucht, umfaßt (umfassen).

14. Verwendung nach einem der vorhergehenden Ansprüche, **dadurch gekennzeichnet, daß** das (die) Mittel (22, 23, 24) zum Abdichten gegen Gase zwischen dem Schmelz/Läuterungs-Abteil (1) an der Verbindungsstelle zwischen dem Schmelz/Läuterungs-Abteil (1) und dem angrenzenden stromabwärtigen Abteil (19) und/oder an der Verbindungsstelle zwischen zwei aufeinander folgenden stromabwärtigen Abteilen (18, 19) und/oder in einem der stromabwärtigen Abteile in der Nähe einer dieser Verbindungsstellen vorgesehen ist (sind).

15. Verwendung nach einem der vorhergehenden Ansprüche, **dadurch gekennzeichnet, daß** das Schmelz/Läuterungs-Abteil (1) in ein als Vorkanal bezeichnetes erstes stromabwärtiges Abteil (18) mit verringertem Querschnitt mündet, das seinerseits in ein als Kanal bezeichnetes zweites stromabwärtiges Abteil (19) mit weiter verringertem Querschnitt mündet.

16. Verwendung nach einem der vorhergehenden Ansprüche, **dadurch gekennzeichnet, daß** die Abmessungen des (der) stromabwärtigen Abteils (Abteile) (18, 19) im Verhältnis zum Schmelz/Läuterungs-Abteil (1) derart gewählt sind, daß sie eine Tiefe der Glasschmelze, die durch das (die) stromabwärtige(n) Abteil(e) strömt, ohne einen Teilrückstrom der Glasschmelze zum Schmelz/Läuterungs-Abteil (1) festlegen.

## Claims

1. Application of a furnace to the supply of molten glass to installations for forming flat glass of the float-glass installation type, the said furnace comprising a compartment (1) for melting/refining the glass, the said compartment being provided, at the upstream part, with at least one opening (12) being fed with vitrifiable materials (10) by means of a charging device placed opposite, and close to which there is at least one opening (14) for discharging the combustion gases and, in the downstream part, an opening (14) for discharging the molten glass, opening out into one or more successive downstream compartments (18, 19) intended to take the molten glass to the forming area, the melting of the vitrifiable materials being ensured, in the melting/refining compartment (1) essentially by a plurality of oxygen burners (16), **characterised in that** the said melting/refining compartment (1) is designed without any inlet of air notably from the downstream compartment or compartments, and **in that** the upstream part (8) of the said melting/refining compartment (1) where the vitrifiable materials (10) are charged is protected from the radiation of the flames from the burners (16) by a heat screen means (11) of the shadow wall or surbased arch type, and notably with no burners, all the vitrifiable materials being fed into the furnace in the upstream part.

2. Application according to Claim 1, **characterised in that** the furnace is equipped with at least one means for sealing, vis-à-vis gases, the melting and refining compartment (1) notably between the latter and the downstream compartment or one of the downstream compartments (18, 19).

3. Application according to Claim 1 or 2, **characterised in that** the burners (16) are arranged opposite each other in two rows, the burners opening out into the melting/refining compartment (1) through side walls (4, 5) thereof.

4. Application according to one of the preceding claims, **characterised in that** the burners (16) are arranged in a plurality of groups whose heating power is regulated autonomously from one group to another.

5. Application according to one of the preceding claims, **characterised in that** auxiliary heating means are provided in the melting/refining compartment (1), notably in the form of electrodes immersed in the depth of the molten glass.

6. Application according to one of the preceding claims, **characterised in that** the walls of the melting/refining compartment (1), notably the side walls (4, 5) and the crown (7), are equipped with reinforced insulation means in the form of panels made of fibrous insulating material and/or sprayed insulating concrete.

7. Application according to one of the preceding claims, **characterised in that** the ratio between the depth of the molten glass and the total height of the melting and production compartment (1) measured between the bottom (6) and the keystone (7) is, upstream of the heat screen means (11), less than that measured downstream of the said screen.

8. Application according to one of the preceding claims, **characterised in that** the opening or openings (12) for feeding vitrifiable materials (10) are formed in the upstream part (8) of the melting/refining compartment (1) in its front wall (2) or in at least one of its two side walls (4, 5).

9. Application according to Claim 8, **characterised in that** it has two openings (12, 13) for feeding vitrifiable materials (10) in the upstream part (8) of the melting and production compartment (1), openings formed symmetrically with respect to each other in the two side walls (4, 5) of the said compartment (1).

10. Application according to one of the preceding claims, **characterised in that** the melting/refining compartment (1) is provided with openings (14) for discharging the combustion fumes situated in its upstream part (8) where the vitrifiable materials are charged, openings formed in its front wall (2) or in at least one of its two side walls (4, 5).

11. Application according to Claim 10, **characterised in that** auxiliary openings (15) for discharging the combustion fumes are provided in the melting and production compartment (1) in its side walls (4, 5).

12. Application according to one of Claims 10 or 11, **characterised in that** the combustion fumes discharged from the melting and production compartment (1) are transferred to heat recovery devices of the boiler type or devices for heating the vitrifiable materials before charging.

13. Application according to one of the preceding claims, **characterised in that** the means (22, 23, 24) for sealing, vis-à-vis gases, between the melting and production compartment (1) and the downstream compartment or compartments (18, 19) has or have at least one suspended screen and/or a dam partially immersed in the molten glass.

14. Application according to one of the preceding claims, **characterised in that** the means (22, 23, 24) for sealing, vis-à-vis gases, between the melting and production compartment (1) are provided at the junction between the melting and production compartment (1) and the adjacent downstream compartment (19) and/or at the junction between two successive downstream compartments (18, 19) and/or in one of the downstream compartments close to one of these junctions.

15. Application according to one of the preceding claims, **characterised in that** the melting and production compartment (1) opens out into a first downstream compartment (18) with a smaller cross-section, referred to as the fore-channel, itself opening out into a second downstream compartment (19) with an even smaller cross-section, referred to as the channel.

16. Application according to one of the preceding claims, **characterised in that** the dimensions of the downstream compartment or compartments (18, 19) with respect to the melting and production compartment (1) are chosen so that they determine a depth of molten glass circulating in the said downstream compartment or compartments without recirculation of the molten glass to the melting and production compartment (1).
